# EUROPEAN PATENT APPLICATION

(11) **EP 2 484 226 A1**
(43) Date of publication of application: **08.08.2012**
(21) Application number: 10818173.6
(22) Date of filing: 27.09.2010
(51) Int. Cl.: A23J 3/04, A23J 3/06, A23J 1/02, A23L 1/311

(54) **PROTEIN MIXTURE OF MEAT EXTRACT AND COLLAGEN**

(30) Priority: 28.09.2009 BR PI0903597
(71) Applicant: JBS S.A., 01452000 São Paulo (BR)
(72) Inventor: BERTIN, Fernando, 16400-400 Lins (BR)
(74) Representative: Fernandez Lerroux, Aurelio
(86) International application number: PCT/BR2010/000330
(87) International publication number: WO 2011/035403

(57) **Abstract**

A protein mixture of meat extract and collagen from bovine muscle takes the form of a soluble powder composed of macronutrients such as carbohydrates, lipids and proteins, micronutrients such as calcium, iron and sodium, and saturated fat. It is therefore a balanced formulation that preserves all essential amino acids, represents a source of iron and calcium and exhibits a low sodium and saturated fat content. The protein mixture can be used with any type of edible liquid or paste, in the form of food supplements, enteral or parenteral fortifying diets, and is particularly recommended for patients or persons suffering from some form of deglutition disorder.

## Description

### DISCLOSURE OF THE INVENTION

The present application with the title shown hereinabove and objet of the description and claims in this document is directed to an inventive solution in the application field dictated by the "Dietetic-therapeutic" industry, that is, the one that deals with food products the purpose of which is to make out the daily feeding of individuals that suffer from deglutition disorders that restrict the ability of the patient to ingest food safely.

In this scenario, individuals in a "post-labiopalatine fissure surgery" condition, buco-maxillary surgeries, bariatric surgeries, head and neck cancer surgeries, amongst other post-operative periods that require a homogeneous liquid diet are benefited.

In addition, the use of the protein mixture also contemplates individuals in clinical situations that take place concomitantly with the oro-pharyngeal dysphasia such as those with Alzheimer disease, Parkisson disease, Lateral Amiotrofic Sclerosis, multiple traumas, chemotherapy, x-ray, strokes, megasophagus.

Finally, the population of suckling infants, elementary school children, as well as old aged people can also benefit from the protein mixture.

The new product in the form of a powder protein mixture extract associated with collagen was devised from a explicit need to provide all sorts of individuals that suffer from deglutition disorders with an efficient feeding of the nutritional point of view, so that the protein mixture may provide the patient with a fully soluble natural food containing high biological value proteins that may be added to soups, broths, milks, vitamin preparations, creams, pates, purees, candies, jellies, etc, in other words, it can be easily added to all sorts of liquid and/or pasty food suitable to individuals suffering from the cited deglutition disorders.

The new product in the form of a powder protein mixture extract associated with collagen adds value from the point of view concerned with the thorough possibility of being used by all sorts of patients, since it does not present any type of restriction as to the use thereof.

On the other hand, from the nutritional point of view, the claimed product is a powerful source of highly nutritional proteins rich in essential amino acids and collagen. It should be consumed in accordance with individual protein needs by respecting individual feeding restrictions. It can be part of a balanced diet.

On the other hand, from the economical point of view, the cost of this product is low when compared to the possible competitors in the market place.

In order to make such predicates tangible, the new product in the form of a powder protein mixture extract associated with collagen is provided in its composition with a soluble powder concentrated solubilized animal protein containing all the essential amino acids, a low sodium and saturated fat content, besides being an iron source.

On the other hand, in order that said mixture is suitably balanced in the composition thereof, it is necessary to point out that its scientific elaboration is the result of a legitimate interest of a multidiscipline group composed by Dr. Suely Prieto (Centrinho - USP), specialized in the treatment of fissured patients; Dr. Silvia Papini Berto (UNESP - Botucatu) specialized in oncologic and bariatric surgery patients, and the nutritionist Maria Ines Marques who is responsible for the Craniofacial Anomalies Rehabilitation Hospital in Bauru, Sao Paulo University.

Thus, our conclusion is that the powder protein mixture extract associated with collagen does not lack novelty and is associated with inventive activity, since it does not derive obviously or evidently from solutions in nutritional complements for patients with deglutition disorders, thus fulfilling the industrial applicability requirements, as well as the patentability requirements, mainly as a patent, in accordance with article 8 of Law 9.279.

### BACKGROUND OF THE INVENTION

In order to prove the evidence of the context shown hereinabove, a brief explanation of the condition of the art related to the nutritional condition of patients/individual suffering from deglutition disorders is given below, where one skilled in the art will be able to recognize the limiting aspects thereof, in order to discuss on the advantages attained with the introduction of the novel protein mixture containing the dust collagen extract.

The nutritional condition of patients recovering from surgeries: In a study conducted by Dr. Suely Prieto for the last 25 years, more than 60 thousand patients all over Brazil and from other Latin America countries as well, interned in the Craniofacial Anomalies rehabilitation Hospital in Bauru-Säo Paulo (world-wide reference for the treatment of labiopalatine fissures), the paradigm of her study was the recovery from operation of patients who are submitted to a 20 to 50 day homogeneous liquid diet, without the presence of any coarse piece (where all ingredients are mixed and then strained).

Restrictions to the preparation of the momogeneous liquid diet: From the nutritional point of view, there is a great difficulty in the preparation of this diet, the purpose of which is to provide the patients with the adequate protein content, mainly for their recovery from surgeries, in view of the fact that there is a loss when the meat is chopped and then strained, which in turn results in a compromised nutritional dosage to the patients, thus consequently hampering their recovery.

Within this critical analysis, consideration should also be given to the fact that the protein matter held in the straining process and ultimately discarded brings about a high cost for obtaining such an homogeneous liquid diet.

Complementary nutritional food for patients/individuals with deglutition disorders of the prior art: In the market place there are known products that are sold as food supplements, vitamin and proteins mixtures, especially synthetic proteins that in a critical analysis exhibit a number of negative aspects of great repercussion, amongst which the following are listed:
- It is very expensive to obtain same;
- The consumption thereof is restricted only to privileged social high class people; and
- Restriction as to the bioavailability inherent to the use of synthetic proteins.

Briefly, nutritional supplements that are chemically defined have been used for some time now, with excellent organic results (STRATTON RJ. Summary of a systematic review on oral nutritional supplement use in the community. Proceedings of the Nutrition society. 2000; 59:469-476; VENEGAS E, SOTO A, CÓZAR MV, PEREIRA JL, ROMERO H, GARCIA-LUNA PP. Oral nutritional supplements. Are they useful? Nutr. Hosp. 2000; 15 Suppl 1:49-57; MILNE AC, AVENELI A, POTTER J. Meta-Analysis: Protein and Energy Supplementation in Older People. Ann Intern Med. 2006; 144:37-48 and CAMPOS LN. What is the impact of the use of oral nutritional supplements in the life quality of the patient? Extracted from http.www.nutritotal.com.br), but not always accessible to the social-economical standard of the patient.

### PROPOSAL OF THE INVENTION

In view of the explanation hereinabove in the Background of the Invention, the applicant has devised a novel powder protein mixture extract associated with collagen, the use of which brings about a number of advantages when compared to other techniques disclosed in the state of the art, and all technical information that make out the basis to effectively consolidate this new mixture is shown herein.

The concept of proteins: They have a major role in the repairing and construction of tissues, since they are the main component of muscles, organs and glands. Moreover, they participate in the construction of each muscle cell, tendon and ligament, besides enzymes, hormones, and body fluids, except for the bile and urine, and constitute more than half of the dry weight of many organs.

The nutritional problems of public health: Already in 1994, the conditions related to protein dosage have been taken into consideration in predominant nutritional problems in public health, from elementary school children to adults, suggesting that "when recommending the protein intake in a certain food mixture, the following factors should be taken into account: nitrogen content, quantity of essential amino acids, digestibility, whole weight of the mixture, and the presence of other nutrients." (MARCHINI JS, RODRIGUES MMP, CUNHA SFC, FAUSTO MA, VANUCCHI H, DUTRA DE OLIVEIRA JE. Calculation for recommendations regarding protein intake: their application to children and adults taking Brazilian foods. Rev. Saúde Pública, No. 28 (2), p. 146-152, 1994).

Nutritional problems in clinical situations: Several clinical situations require an increased dosage of proteins for maintaining a metabolically active muscle mass and a reduction in the damages caused by a certain disease. As an example, the applicant brings to light the clinical situations of cancer (surgeries, chemotherapies and X-ray), lateral amiotrofic sclerosis, Alzheimer disease, Parkisson disease, strokes, multiple traumas, megasophagus, among others, that are mostly present concomitantly with orofaringeal dysphagia.

Deglutition disorders: They are disorders where the ability of the patient to ingest food safely is restrained, amongst which are protein sources, mainly those of animal origin. Most of the times, the dysphagias lead to an unsafe deglutition of clear solid liquid consistence food, where the patient should permeate viscosities characterized by ADA (American Dietetic Association. National Dysphagia Diet: Standardization for Optimal Care. Washington: America Dietetic Association, 47 p. 2002), such as nectar (51 to 350 cps), honey (351 to 1750 cps and pudding > 1751 cps), resulting in the difficulty in obtaining preparations that fulfill the needs of a safe intake by the patient, are bromatologically balanced and rich in proteins as well.

Still within the scope of the present understanding of the deglutition disorder, it is pertinent to explicit the bariatric surgeries and a number of the gastrointestinal surgeries that lead to the reduction of the protein intake and the disabsorptive syndrome. (OLIVEIRA JS. Metropolitan Life Insurance Company. 2000 and BARROS SP, PAPINI-BERTO S, VAZ LMN. Role of proteins in the dysphagia and post-bariatric surgery. Nutrition: quality in feeding. Year 8, v. 31, p. 42-43, 2009).

Still within the group of patients, that is, those individuals who are prone to suffer from deglutition syndrome, the group of old aged people appears preponderantly and they constitute the segment that grows more steeply and represent 14.5 million out of the Brazilian population (Brazilian Institute of Geography and Statistics - IBGE. Preliminary results of 2000 census.)

Particularly with regard to this group of individuals, the problem connected to the deglutition syndrome is directly related to the changes in the functional ability of tissues and a greater risk towards the development of diseases. In this condition, the balanced feeding is of paramount importance for the maintenance and/or recovery of the health of this group in the whole population.

When studying the alimentary habits and the intake of nutrients of a group of old aged people, (ABREU WC, FRANCESCHINI SCC, TINOCO ALA, PEREIRA CAS, SILVA MMS. Inadequacy in the food consumption and factors that interfere with the energy intake of old aged people registered with the Municipal Third Age Program of Viçosa (MG). Ver. Baiana de Saúde Pública, v. 32, No. 2, p. 190-202, 2008), have confirmed an insufficient protein intake for 79,3% of the individuals; an insufficient caloric intake for 92,2%, as well as a high inadequacy in the consumption of vitamins C, B1, B2 and B6, iron and calcium.

According to these authors, the protein intake was affected negatively, mainly by toothless people, that is, people who lost their teeth and are thus prevented from chewing food such as meat, high biological value protein source, as well as iron, zinc, calcium, among other micronutrients.

Finally, special attention should be paid to the group of individuals that comprises infants and preliminary school children - periods when the individuals are fully developed - where enough doses of proteins, vitamins and minerals, amongst which we may cite iron and calcium, are essential to the growth and adequate development, whose recommendations of protein intake may vary according to the protein content, the quantity of essential amino acids provided and the digestibility of the diet (CASTRO TC, NOVAES JF, SILVA MR, COSTA NMB, FRANCESCHINI SCC, TINOCO ALA, LEAL PFG. Characterization of food consumption, social-economical environment and nutritional condition of infants in municipal day nursery centers. Revista de Nutriçao, v. 18, No. 3, p. 1-10, 2005).

The need of the liquid diet: Still within the scope of the deglutition disorders described hereinabove, the same scenario is repeated in situations of post-buco-maxillary surgeries that require an homogeneous normo-proteinaceous or hyper-proteinaceous liquid diet, wherein all the ingredients that are mixed and then strained, in order to allow the operated organ to rest, also will benefit from a high biological value protein mixture that is palatable and highly soluble.

Preparation of the protein mixture: The greatest difficulty in the preparation of soups is concerned with the meat protein dosage, since a large portion of either pieces of meat or chopped meat that are mixed and then strained is lost during the straining process because they are trapped in the sieve (PERES SPBA, ARENA EP, BURINI RC, SUGUIMOTO RM. Impact of the orthognathic surgery and postoperative behavior on the proteinaceous-energetic nutritional condition of patients. Orthodontia, v. 31, p. 8-16, 1998 and PERES SPBA, ARENA EP, BURINI RC, SUGUIMOTO RM. Use of food supplements and nutritional condition of patients submitted to the orthognathic surgery with maxillary-mandibular blocking. Brazilian Magazine of Clinical Nutrition, v. 1, SERIES 1. p. 21-28, 2006). Additionally, the meat fibers may damage the mixing equipment, thus increasing the depreciation thereof and consequently reducing its life.

The powder protein mixture extract associated with collagen: It is a soluble powder protein mixture developed with a concentrated powder solubilized protein, that is, 100% of animal origin, without the addition of any spices, stabilizers, colorants, or any other manufactured product, characterized by being:
- rich in bovine protein of a high biological value;
- an important source of iron;
- exhibit a low saturated fat content;
- soluble.

Relevant fact: The protein mixture was developed from manufactured by-products by using cuts from front and back muscles from cattle slaughter and bone removal, a process that is submitted to high quality control and supervision by the Federal Inspection Service.

### DETAILED DESCRIPTION

This topic of the present application is presented for the purpose of consolidating the exclusive characteristics of the claimed protein mixture, that is, it proves that this is a soluble product rich in high biological value animal protein, as well as an iron source with a reduced saturated fat and sodium content, also evidencing that it is highly palatable, thus ratifying its use in the diet of patients under clinical situations that take place concomitantly with orofaringeal dysphagia; post-buco-maxillary surgeries, bariatrica surgeries, both in old aged people and infants.

Additionally, it should be explained that the results to be presented in the development of this topic are the result of the application of a consecrated and widely dominated bromatologic composition analysis technique, thus revealing the bromatologic composition of the protein mixture.

The caloric value embodied in the protein mixture: For every 100 grams of the mixture, the following quantities of calories and macronutrients are found:

**Table 1. Calories (kcal/100 g) and macronutrients (g/100 g) of protein mixture**

| Macronutrient | g/100 g mixture |
|---|---|
| Calories (kcal/100 g) | 335 |
| Total carbohydrates (g/100 g) | 3.25 (calculation by difference) |
| Total lipids (g/100 g) | 1.6 |
| Proteins (g/100 g) x 6.25 | 80.25 |

Quantity of total calories of the protein mixture X daily needs of calories of the body relationship: The quantity of total daily calories required by the human body means the organic processes that it performs when resting, plus the quantity of calories that are required for the out-of-the-body work needs. These needs are called "requirements" in Table 2 in kilocalories (Kcal) per day.

**Table 2. Average energy requirements for several ages**

| Age | Requirements |
|---|---|
| 7 to 12 months babies | 710 kcal/day |

| Children | |
|---|---|
| 1 to 2 years old | 1,020 kcal/day |
| 3 to 8 years old | 1,700 kcal/day |
| 9 to 13 years old | 2,175 kcal/day |
| to 18 years old | 2,760 kcal/day |

| Adults older than 18 | |
|---|---|
| Men | 3,067 kcal/day |
| Women | 2,400 kcal/day |

| | |
|---|---|
| (Source: Food and Nutrition Board, 2002) | |

By comparing Table 1 and Table 2, it is possible to attain the energy requirements percentage for each class of individuals, when the parameter is the use of 100 grams of the claimed protein mixture, thus fulfilling 47.2% of suckling infants requirements; 32.8% of 1-2 year old children requirements, 19.7% of 3-8 year old children requirements; 15.4% of 9-13 year old children requirements; 12.2% of 14-18 year old teenagers requirements; 10.9% of male adults requirements and 14% of female adults requirements.

The quantity of saturated fats found in 100 g protein mixture: The cuts used for this purpose had a positive reflection on the quantity of fat on the protein mixture, what will favor its dosage for patients under a saturated fat diet.

With respect to the excessive intake of saturated fat and cholesterol that are found in animal origin food, it is deemed to be a risk factor for cardiac diseases, diabetes mellitus, atherosclerosis, etc.

On the other hand, such fats are provided with a number of organic functions for the protection of organs, hormone production and biliary acids, among others. (NOVELLO D, FREITAS RJS of, QUINTILIANO DA. Fat and cholesterol content in swine, bovine and chicken meat. Nutrire, v. 31, No. 1). However, there is still an equivocated theory that states that animal origin products exhibit a large fat and cholesterol content, not taking into account the advances in the Zoothecnics field, such as genetic and nutritional improvement, that greatly contribute to an reversion in the nutritional profile of meat products, and may be verified in the present study, where the quantity of total fat in 100 g protein mixture was small, and this affirmation can be consolidated in Table 3, where the total lipids contained in the protein mixture has been compared with the lipid content of other meat products, in a study conducted by Inmetro that used samples of processed meat before the determination of fat content, just like the present study.

**Table 3. Comparison of the quantity of saturated fats found in 100 g of several meat products and the protein mixture**

| Product (100 g) | Quantity of total fat (mg) |
|---|---|
| Fatless roasted rib eye steak* | 2,026.13 |
| Fat roasted loin* | 3,304.03 |
| Fatless roasted shank* | 1,666.26 |
| Powder Protein Mixture | 1,600.00 |

| | |
|---|---|
| ("Source: Inmetro) | |

The biological value exhibited by the protein mixture: The proteins constitute the live protoplasm and participate in the vital processes of the body. They are formed by amino acids, the essential ones being those that may derive from the daily diet intake, and it should be stressed out that the Brazilian Society of Feeding and Nutrition - SBAN considers that the dosage of animal origin proteins should be safely limited to 30-35% of the total protein intake (except for children of less than one year of age), taking into account the saturated fatty acid content found in such foods and their atherogenic effect. (NOVELLO D, FREITAS RJS de, QUINTILIANO DA. Fat and cholesterol content in swine bovine, and chicken meat. Nutrire, v. 31, No. 1. 25, INMETRO. Bovine and Swine meat: fat and cholesterol content in food, and MARTINS IS. Energy and nutrients requirements of the Brazilian population. Rev. Saúde Pública, v. 13, suppl. 1, Sa̅o Paulo, Sept. P.1-14, 1979)

To identify this predicate the amino acid profile that makes out the protein mixture was evaluated and then translated into animal protein content, the result of which is shown in Table 4.

**Table 4. Amino acid profile found in the protein mixture**

| Amino acids | mg aa/g protein |
|---|---|
| Aspartic acid | 3.82 |
| Threonine | 1.15 |
| Serine | 2.02 |
| Glutamic acid | 8.32 |
| Proline | 7.93 |
| Glycine | 15.89 |
| Alanine | 5.80 |
| Cystine | 0.98 |
| Valine | 1.07 |
| Methionine | 0.17 |
| Isoleucine | 0.97 |
| Leucine | 1.96 |
| Tyrosine | 0.60 |
| Phenylalanine, | 1.19 |
| Lysine | 2.54 |
| Ammonia | 0.75 |
| Hystidine | 3.4 |
| Arginine | 4.8 |
| Tryptophan | ND |

In order to complement the disclosure, it is important to compare the quantity of essential amino acids of the protein mixture with those found in foods, wherein rice, beans and bovine meat have been chosen for such purpose, and said comparison is given in Table 5.

**Table 5. Quantity of essential amino acids found in rice, beans, and the protein mixture**

| Essential amino acids (mg/100 g) | Cooked rice | Cooked beans | Bovine meat | Protein mixture |
|---|---|---|---|---|
| Isoleucine | 85 | 242 | 1,299 | 970 |
| Leucine | 163 | 428 | 2,429 | 1,960 |
| Lysine | 71 | 379 | 2,531 | 2,540 |
| Methionine + Cystine | 87 | 148 | 999 | 1,150 |
| Phenylalanine + Tyrosine | 112 | 442 | 2,094 | 1,790 |
| Threonine | 70 | 228 | 1,270 | 1,150 |
| Tryptophan | 23 | 67 | 373 | n/d |
| Valine | 120 | 281 | 1,469 | 1.070 |

| | | | | |
|---|---|---|---|---|
| (Source * Bowes, 1989). | | | | |

Table 5 confirms that the protein mixture is evidently a soluble product exhibiting high biological value proteins that can be added to soups, milks, vitamin preparations, etc. - thus, it provides the individuals who cannot chew foods such as meat with a suitable product that fulfills their nutritional needs.

The quantity of micronutrients Calcium, Iron and Sodium found in the protein mixture: The dosage of Calcium and Iron will contribute as a complement to the needs in any clinical situation, at any age to be taken into consideration. On the other hand, there was a great concern about the quantity of sodium, and so it was decided that it would not be added in the preparation of the mixture. Thus, the existing quantity is exclusively related to the sodium contained in the meat itself that was concentrated through the techniques for the preparation of the protein mixture. Even so, they are quantities that do prevent its use in patients suffering from hypertension or any other sodium-resistant pathology, which should then be just controlled. To consolidate the presence of these elements, Table 6 is given hereinbelow.

**Table 6. Micronutrients analyzed**

| Micronutrient | mg/100 g |
|---|---|
| Calcium (mg/100 g) | 33.85 |
| Iron (mg/100 g) | 1.15 |
| Sodium (mg/100 g) | 1,701.5 |

The way the composition of the protein mixture is obtained, as well as the presence of micronutrients, essential amino acids, total fats and caloric value of macronutrients, described in this detailed description of the invention is provided only as an example. Changes, modifications and variations may be made for other ways the protein mixture can be obtained by those skilled in the art without, however, diverting from the object disclosed in the patent application which is exclusively defined by the attached claims.

From what was described and shown, it can be seen that the claimed "PROTEIN MIXTURE OF MEAT EXTRACT AND COLLAGEN" is in accordance with the rules that regulate the patent in the light of the Industrial Property Law, thus being consequently patentable in view of what was disclosed herein.

## Claims

1. A PROTEIN EXTRACT OF MEAT EXTRACT AND COLLAGEN, especially indicated for individuals that suffer some degree of deglutition disorder, **characterized in that** it is in the form of a soluble powder comprised of a powder extract that is composed of macro-nutrients such as whole carbohydrates, whole lipids and proteins, mainly essential proteins such as aspartic acid, Threonine, Serine, glutamic acid, Proline, Glicine, Alanine, Cystine, Valine, Methionine, Isoleucine, Leucine, Tyrosine, Phenylalanine, Lysine, Ammonia, Histidine, Arginine and Triptofane, and micro-nutrients such as Calcium, Iron and Sodium, and saturated fat.

2. A PROTEIN EXTRACT OF MEAT EXTRACT AND COLLAGEN, according to claim 1, wherein the powder extract is **characterized by** being derived from by-products of industrialized front and back muscle cuts (meat cuts), without the addition of any spice, stabilizers, colorants, or any other industrialized product.

3. A PROTEIN EXTRACT OF MEAT EXTRACT AND COLLAGEN, according to claim 2, wherein the front and back muscle cuts are **characterized by** being derived from by-products of cattle slaughter and bone removal.

4. A PROTEIN EXTRACT OF MEAT EXTRACT AND COLLAGEN, according to claim 1, wherein the protein mixture for each amount of 100 grams in one embodiment is **characterized by** having a caloric value of 335 kcal; 3.25 g total carbohydrates; 1.6 g total lipids and 80.2 5 g proteins (g/ 100 g) x 6.25.

5. A PROTEIN EXTRACT OF MEAT EXTRACT AND COLLAGEN, according to claim 2, wherein the caloric value of 335 kcal/100 g mixture is **characterized by** providing 47.2% of infants demand; 32.8% of 1 - 2 year old children demand, 19.7% of the petitions of 3 - 8 year old children demand, 15.4% of 9 - 13 year old children demand; 12.2% of 14 - 18 year old teenagers demand; 10.9% of the male adults demand and 14% of female adults demand.

6. A PROTEIN EXTRACT OF MEAT EXTRACT AND COLLAGEN, according to claim 1, wherein the protein mixture for each amount of 100 grams in one embodiment is **characterized by** having essential amino acids at concentrations of mg amino acid/gram protein: 3.82 mg aspartic acid, 1.15 mg Threonine, 2.02 mg Serine, 8.32 mg glutamic acid, 7.93 mg Proline, 15.89 mg Glycine, 5.80 mg Alanine, 0.98 mg Cystine, 1.07 mg Valine, 0.17 mg Methionine, 0.97 mg Isoleucine, 1.96 mg Leucine, 0.60 mg Tyrosine, 1.19 mg Phenylalanine, 2.54 mg Lysine, 0.75 mg ammonia, 3.4 mg Histidine, 4.68 mg Arginine.

7. A PROTEIN EXTRACT OF MEAT EXTRACT AND COLLAGEN, according to claim 1, wherein the protein mixture for each amount of 100 grams in one embodiment is **characterized by** having micron-nutrients, at concentrations of 33.85 mg Calcium, 1,15 mg Iron and 1701.5 mg Sodium.

8. A PROTEIN EXTRACT OF MEAT EXTRACT AND COLLAGEN, according to claim 1, wherein the protein mixture for each amount of 100 grams in one embodiment is **characterized by** having a reduced amount of saturated fat in the order of 1,600 mg.

9. A PROTEIN EXTRACT OF MEAT EXTRACT AND COLLAGEN, according to all the precedent claims, wherein the protein mixture is **characterized by** being applicable to all kinds of liquid and pasty food, thus assuring a great palatability.
